# EUROPEAN PATENT APPLICATION

(11) **EP 4 792 994 A1**
(43) Date of publication of application: **19.08.2026**
(21) Application number: 26157306.7
(22) Date of filing: 09.02.2026
(51) Int. Cl.: B25J 9/04, B25J 13/08

(54) **ROBOT SYSTEM**

(30) Priority: 13.02.2025 JP 2025021700
(71) Applicant: Nachi-Fujikoshi Corp., Tokyo 105-0021 (JP)
(72) Inventor: ONO, Jotaro, Toyama, 930-8511 (JP)
(74) Representative: Plougmann Vingtoft a/s

(57) **Abstract**

A robot system (1) includes a plurality of arms (A1-A4), a housing (20) to house one arm (A4) and a motor (23) for moving the one arm (A4), a metal bracket (26) disposed in the housing between the motor (23) and the outer housing (20) circumference, and a capacitive proximate sensor (4). The capacitive proximate sensor (4) includes a shield member (8b) located adjacent to the metal bracket (26) on a side of the metal bracket (26) opposite to the motor (23), a detection electrode (8d) located adjacent to the shield member (8b) on a side of the shield member (8b) opposite to the metal bracket (26), a circuit substrate (9) to transmit and receive a signal to and from the detection electrode (8d), and a signal cable (100). The signa cable (100) includes a signal line (104) to transmit the signal between the circuit substrate (9) and the detection electrode (8d), a cylindrical shield line (102) formed to surround the signal line (104) to transmit a signal between the circuit substrate (9) and the shield member (8b) and an insulating coating (101) coated to surround the shield line (102).

## Description

### Technical Filed

The present invention relates to a robot system equipped with a capacitive proximity sensor.

### Background Art

There are cases where humans and robots work collaboratively on workpieces. Robots used in such cases are referred to as collaborative robots. Some collaborative robots are equipped with a capacitive proximity sensor that detects humans and other objects nearby.

Japanese Patent Application Laid-Open No. 2021-020289 describes a robot that includes a first arm equipped with a capacitive first proximity sensor and a second arm equipped with a second proximity sensor, the sensitivity of the second being different from that of the first.

### Summary

### Technical Problem

The capacitive proximity sensor according to the embodiments of the present invention includes signal cables and operates with a signal transmitted via signal cables. The outer circumference of each of the signal cables is covered with an insulating coating or the like so that the signal cable is protected from electromagnetic noise from members including, for example an arm-driving motor disposed inside the housing. However, the cable covered with an insulating coating cannot satisfactorily shield the signal cable from the electromagnetic noise from the members that include a motor. The inventor has become aware that in the robot described in Japanese Patent Application Laid-Open No. 2021-020289, the detection accuracy of the capacitive proximity sensor used in the robot cannot be prevented from being compromised by the susceptibility of the signal cable to electromagnetic noise from the members including a motor disposed inside the arm housing.

### Solution to Problem

An object of the present invention is to provide a robot system that can prevent the detection accuracy of the capacitive proximity sensor from being compromised by the susceptibility of the signal cable of the capacitive proximity sensor to the electromagnetic noise coming from the inside of the robot arm.

To solve the foregoing problem, the robot system according to the embodiment of the present invention includes a plurality of arms operated to perform a preprogramed work, a housing configured to house one of the plurality of arms. The housing stores a motor driven to move said one of the plurality of arms. The robot system further includes a metal bracket disposed in the housing between the motor and an outer circumference of the housing and a capacitive proximate sensor operable to sense an object nearby. The capacitive proximate sensor includes a shield member located adjacent to the metal bracket on the side of the metal bracket opposite to the motor, a detection electrode located adjacent to the shield member on the side of the shield member opposite to the metal bracket, a circuit substrate configured to transmit and receive a signal to and from the detection electrode and a signal cable. The signal cable includes a signal line configured to transmit the signal between the circuit substrate and the detection electrode. The signal cable further includes a cylindrical shield line formed to surround the signal line to transmit a signal between the circuit substrate and the shield member. The signal cable further includes an insulating coating coated to surround the shield line.

In another aspect of the present invention, the circuit substrate is placed in the housing on the side of the metal bracket away from the housing. The metal bracket is formed in a shape that provides shielding between the motor and the detection electrode. The robot system further includes a metal member placed in the housing to provide shielding between the circuit substrate and the motor.

Further in an aspect of the invention, the metal bracket is integrally formed with the metal member.

Further in an aspect of the invention, the metal bracket is electrically grounded via the arm.

Still further in an aspect of the invention, the capacitive proximate sensor includes a layered structure including a layer of the shield member and a layer of the detection electrode. The layered structure further includes a layer of first insulating member and a layer of second insulating member, The layer of first insulating member, the layer of shield member, the layer of second insulating member and the layer of detection electrode are layered one next to another in the order toward away from the housing.

### Advantageous Effect of Invention

According to the present invention, the robot system can suppress the detection accuracy of the capacitive proximity sensor from being comprised by the susceptibility of the signal cable of the capacitive proximity sensor to electrical noise coming from the parts accommodated inside the arm.

### Brief Description of the Drawings

Fig. 1 is a perspective view schematically showing an example of an overall configuration of a robot system including a capacitive proximity sensor according to an embodiment;
Fig. 2 is an enlarged view showing an example of a specific configuration of a fourth arm shown in Fig. 1;
Fig. 3A is an exploded perspective view showing an exemplary internal configuration of the fourth arm in Fig. 2;
Fig. 3B is a partial enlarged view of a housing seen from the front in the exploded perspective view of the fourth arm in Fig. 3A;
Fig. 4 is an exploded perspective view showing an exemplary peripheral configuration of a detection electrode in Fig. 3A; and
Fig. 5 is a diagram showing an exemplary circuit configuration of a circuit substrate in Fig. 3A.

### Detailed Description of Embodiments

An embodiment of the present invention (hereinafter, referred to as "the present embodiment") will now be described with reference to the accompanying drawings. To facilitate understanding of the description, the same components and steps in the drawings are denoted by the same reference numerals where appropriate, and redundant descriptions are omitted.

### <Overall Configuration>

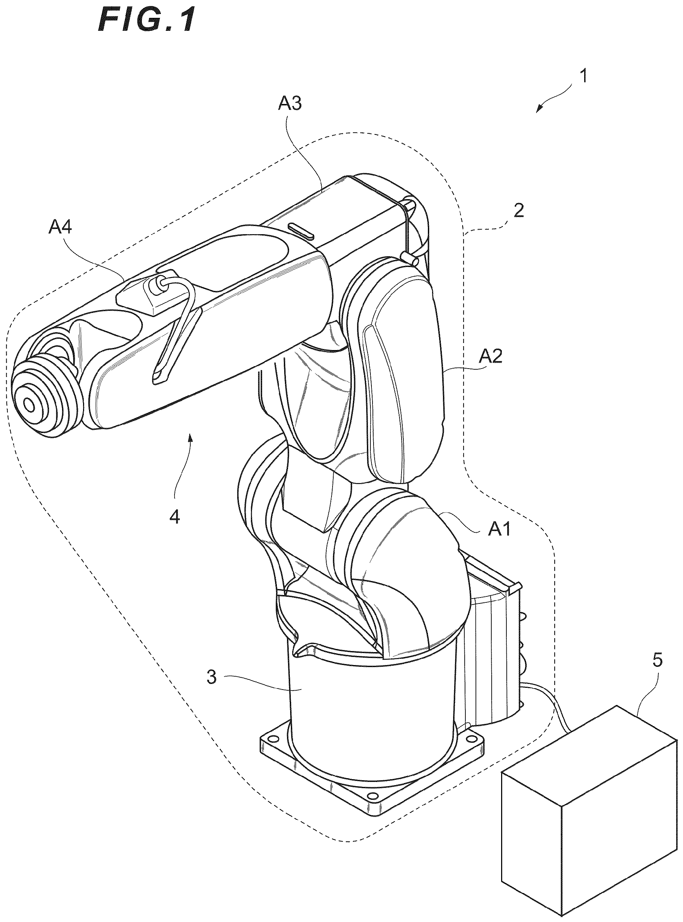

Fig. 1 is a perspective view schematically showing an example of an overall configuration of a robot system 1 including a capacitive proximity sensor according to the present embodiment.

The robot system 1 is a system including an industrial robot that performs processing such as machining and transporting of a workpiece. For example, the robot system 1 includes a collaborative robot that performs work in a workspace shared by a human. As shown in Fig. 1, the robot system 1 includes a robot 2 and a control apparatus 5.

As shown in Fig. 1, the robot 2 is an articulated robot and includes a plurality of arms and a plurality of joints. Specifically, the robot 2 includes a base 3, a first arm A1, a second arm A2, a third arm A3, and a fourth arm A4. The robot 2 also includes a sensor 4. The sensor 4 is operably connected to the control apparatus 5.

The base 3 is the foundation of the robot 2. The base 3 is fixed to a floor surface or wall surface and supports the robot 2. The first arm A1 is connected to the base 3 via a rotating shaft. The first arm A1 is rotatable by means of a motor, not shown, relative to the base 3 about the rotating shaft. Like the first arm A1, the second, third, and fourth arms A2, A3, and A4 are likewise rotatable by means of motors, not shown, about their respective rotating shafts. An end effector is attached at the distal end of the fourth arm A4. By moving the respective joints, the robot 2 performs a preprogrammed operation. Note that the number of arms of the robot 2 is not limited to any particular number.

The sensor 4 is a capacitive proximity sensor configured to detect objects such as humans. In the present embodiment, the term "object" is given a broad scope that includes humans, workpieces and other objects. Specifically, the sensor 4 detects an object preset in a close proximity. The sensor 4 may be configured to detect a displacement of an object.

The sensor 4 is disposed in an arm of the robot 2. In the present embodiment, the sensor 4 is disposed in the fourth arm A4 as an example. The position of the sensor 4 in the robot 2 is not limited to any particular position.

The control apparatus 5 is an information processing apparatus that controls the operation of the robot 2. The control apparatus 5 controls the operation of each of the arms of the robot 2 so that the robot 2 performs preprogrammed operations. For example, the preprogrammed operations of the robot controlled by the control apparatus 5 include gripping a workpiece and transporting the workpiece from one position to another.

The control apparatus 5 stops the operation of the robot 2 in response to an output from the sensor 4. Specifically, the control apparatus 5 compares the output of the sensor 4 with a threshold to determine how close an object is with respect to the robot 2. If the object is determined to be present in close proximity to the robot 2, the control apparatus 5 stops the operation of the robot 2. For example, the control apparatus 5 stops the operation even when the robot 2 is in the middle of performing a preprogrammed operation. Note that alternative to stopping the operation of the robot 2, the control apparatus 5 may slow down the operation of the robot 2.

### <Configuration Example of Arm Equipped with Sensor 4>

Next, an exemplary configuration of the arm equipped with the sensor 4 will be described. In the exemplary configuration, the arm of the robot 2 equipped with the sensor 4 is the fourth arm A4.

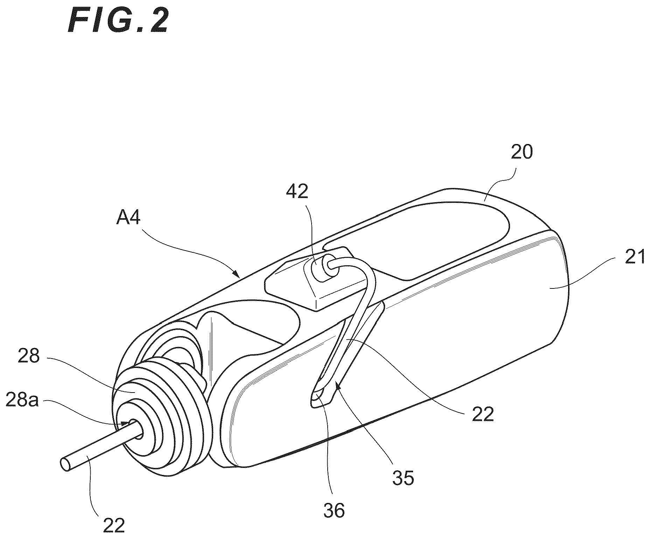

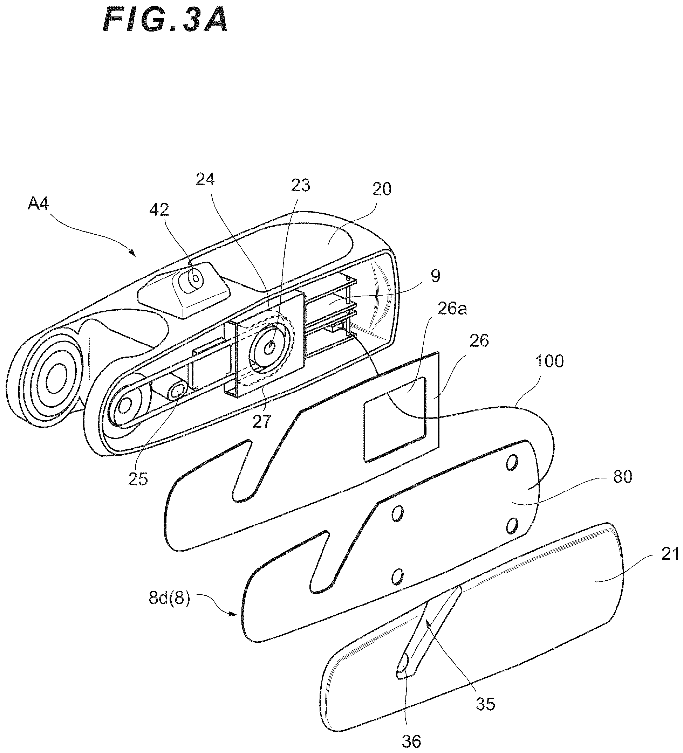

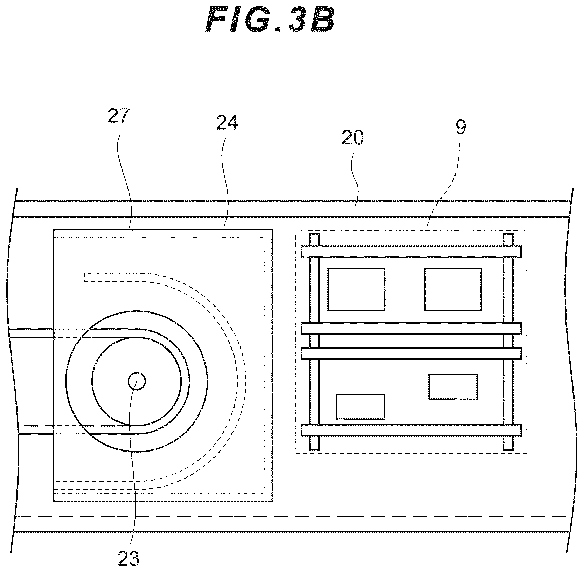

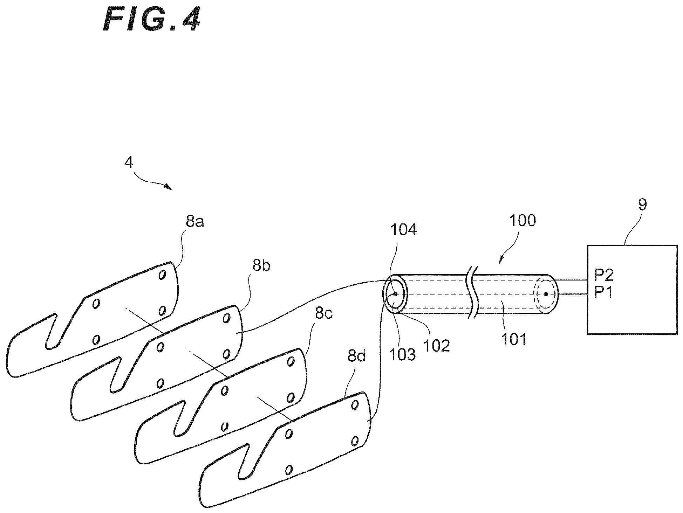

Fig. 2 is an enlarged view showing an exemplary configuration of the fourth arm A4 shown in Fig. 1. Fig. 3A is an exploded perspective view showing an internal configuration of the fourth arm A4 in Fig. 2. Fig. 3B is a partial enlarged view showing the inside of a housing 20 seen in the exploded perspective view of the fourth arm A4 in Fig. 3A. Fig. 4 is an exploded perspective view showing an exemplary configuration of the sensor 4.

As shown in Fig. 2, the exterior of the fourth arm A4 is formed with the housing 20, which includes the fourth arm A4 and a cover 21. The fourth arm A4 is provided with a cable 22.

As shown in Fig. 3A, the housing 20 accommodates, in the inside thereof, components such as a motor 23 and wiring for operating the robot 2. Other components may be included inside the fourth arm A4. The housing 20 is made of a metal material and is electrically grounded (connected to the reference potential). The housing 20 has an opening 24. The opening 24 is formed in a side surface of the fourth arm A4, for example. The housing 20 also has a boss including a hole 25. The hole 25 runs through from the interior of the housing 20 to the exterior thereof and is continuous to open at a hole 28a of a wrist device 28, which will be described later. The hole 25 is located away from the detection electrode 8d as described below. As shown in Fig. 2, the wrist device 28 is disposed at one end of the housing 20. The wrist device 28 is equipped with an end effector, for example. The wrist device 28 has the hole 28a. A terminal 42 for connecting the cable 22 is disposed on the exterior surface of the housing 20.

The cover 21 is formed with a layered structure 8 and closes the opening 24 of the housing 20. The layered structure 8 includes a first insulating member 8a, a shield member 8b, a second insulating member 8c and a detection electrode 8d. The cover 21 is made of a resin material. The cover 21, since made of a resin material, does not interfere with an electric field generated by the detection electrode 8d in the layered structure 8 and does not influence the detection of an object by the sensor 4.

A hole 36 is formed in the cover 21 so that when the cover 21 is assembled to the housing 20, the hole 36 positionally aligns with the hole 25. The hole 36 runs through the cover 21 between the interior and exterior surface of the housing 20. The cover 21 also has a groove 35 that is formed to extend in the exterior of the housing 20 from the hole 36 through an upper edge of the cover 21 which is aligned with the location of the terminal 42 in the traverse direction of the housing 20.

The exterior of the fourth arm A4 is thus formed by the exterior of the housing 20 and the exterior of the cover 21.

The cable 22 is wiring or the like provided for the operation of the robot 2. Specifically, the cable 22 is wiring or the like provided to operate a tool hand or the like attached to the distal end of the robot 2. For example, the cable 22 is a power supply line or a signal line. The cable 22 is connected to the terminal 42 of the housing 20. The cable 22 is laid to run in the groove 35 of the cover 21 from the terminal 42. The cable 22 is laid to enter the housing 20 from the recess 35, run through the holes 36 and 25 and pass through the hole 28a. Alternatively, the cable 22 may be extended from a portion other than the terminal 42. Instead of the cable coming out of the terminal 42, an air tube may be connected to the terminal 42.

As shown in Figs. 3A and 3B, the fourth arm A4 accommodates, in its inside, the detection electrode 8d, which is a member of the sensor 4, a circuit substrate 9, a metal bracket 26, a metal member 27, and a signal cable 100. The detection electrode 8d constitutes a layer of the layered structure 8 as described below.

The circuit substrate 9 is electrically connected to the layered structure 8, which includes the detection electrode 8d, via the signal cable 100. The circuit substrate 9 includes a circuit for outputting a sensor value representative of a capacitance formed between the detection electrode 8d and an object. Details of the circuit configuration of the circuit substrate 9 will be described below with reference to Fig. 4. In the exploded perspective view shown in Fig. 3A, the circuit substrate 9 is disposed in the housing 20.

The metal bracket 26 and the metal member 27 function to shield an electromagnetic shield. The metal bracket 26 and the metal member 27 are made of a metal material (preferably the same material as that of the housing 20). The metal bracket 26 and the metal member 27 are electrically connected to the housing 20 and have the same potential as that of the housing 20. In other words, like the housing 20, the metal bracket 26 and the metal member 27 are electrically grounded (connected to the reference potential).

The metal bracket 26 is interposed between the housing 20 and the cover 21. Specifically, the metal bracket 26 is located on the side of the motor 23 accommodated in the housing 20 (i.e., on the side of the cover 21) and positioned closer to the motor 23 than the layered structure 8 (i.e., on the side of the layered structure 8 facing the motor 23). The metal bracket 26 is disposed to close the opening 24 of the housing 20. The metal bracket 26 has a hole 26a for the signal cable 100 from the circuit substrate 9 to pass through to reach the detection electrode 8d. The size of the hole 26a of the metal bracket 26 matches the size of the surface of the circuit substrate 9 on the side of the cover 21 where a connector for the signal cable 100 is located. The metal member 27 is mechanically connected to the surface of the metal bracket 26 on the side of the housing 20. In other words, the metal bracket 26 prevents noise produced by the motor 23 and the like inside the housing 20 from reaching the detection electrode 8d.

The metal member 27 is disposed in the opening 24 of the housing 20 to provide shielding between the circuit substrate 9 and the motor 23. The metal member 27 includes a planar member and a boxy member. The planar member is formed in a U-shape to surround the motor 23 when viewed from the side of the cover 21. The boxy member is formed to cover the planar member and the motor 23 and has an opening that exposes the motor 23 in its cover 21-side surface. The planar member is connected to an inner wall of the boxy member. The metal member 27 is configured so that the surface of the boxy member on the side of the housing 20 is connected to the surface of the opening 24 on the side of the cover 21, and the surface of the boxy member on the side of the cover 21 is connected to the metal bracket 26. The metal member 27 thereby electrically isolates the circuit substrate 9 from the section of the housing 20 in which the motor 23 and other electrical parts are located. In other words, the metal member 27 prevents noise produced by the motor 23 and the other electrical parts positioned inside the housing 20 from reaching the circuit substrate 9. The metal member 27 is not limited to the shape and arrangement discussed above and may have any shape and any arrangement as long as it can provide shielding between the circuit substrate 9 and the motor 23 and it can be accommodated in the housing 20.

In the present embodiment, the metal member 27 is disposed in the housing 20 as a separate member from the metal bracket 26. However, the embodiment is not limited to the configuration. The metal member 27 may be integrally formed with the metal bracket 26. The metal bracket 26 and the metal member 27, integrally formed together, may be formed in any shape as long as the motor 23 and the detection electrode 8d can be shielded from each other, and the motor 23 and the circuit substrate 9 can be shielded from each other.

The detection electrode 8d of the sensor 4 is disposed in the housing 20. The detection electrode 8d generates an electromagnetic field used to detect an object entering the range of the generated electric field. The detection electrode 8d generates the electromagnetic field toward the cover 21. The detection electrode 8d thereby creates a capacitance with the object. For example, the created capacitance changes with the distance between the detection electrode 8d and the object. The capacitance created between the object and the detection electrode 8d is then detected by the circuit substrate 9 connected to the detection electrode 8d via the signal cable 100.

The detection electrode 8d is located between the housing 20 and the cover 21. Specifically, the detection electrode 8d is interposed between the metal bracket 26 and the cover 21. The detection electrode 8d is isolated from the external environment by the cover 21. For example, the cover 21 prevents the detection electrode 8d from being exposed to outside contaminants. The detection electrode 8d has a detection surface 80. The detection surface 80 is an electrode surface that faces the cover 21.

The detection electrode 8d forms one of the layers of the layered structure 8. The layered structure 8 is connected to the circuit substrate 9 via the signal cable 100 and transmits signals to the circuit substrate 9. Details of the layered structure 8 and the signal cable 100 will now be described with reference to Fig. 4. The layered structure 8 is formed with the first insulating member 8a, the shield member 8b, the second insulating member 8c and the detection electrode 8d. In the present embodiment, the sensor 4 is constituted with the first insulating member 8a, the shield member 8b, the second insulating member 8c, the detection electrode 8d, the signal cable 100 and the circuit substrate 9.

The first insulating member 8a is made of an insulating film (polyimide film), for example, and insulates the shield member 8b from contacting other members including the metal bracket 26. In the layered structure 8, the first insulating member 8a is located closest to the housing 20 and farthest from the cover 21. The surface of the first insulating member 8a on the side of the housing 20 faces the metal bracket 26. The surface of the first insulating member 8a on the opposite side of the housing 20 is attached to the shield member 8b.

The shield member 8b functions as a conventional active shield. The shield member 8b is applied with a potential equivalent to that of the detection electrode 8d and prevents capacitance from forming between the detection electrode 8d and other parts located on the side of the housing 20 with respect to the detection electrode 8d. Specifically, the shield member 8b is connected to a terminal P2 of the circuit substrate 9 via a shield line 102 of the signal cable 100. A signal is transmitted to the shield member 8b via the shield line 102 at the same potential as that of the signal transmitted to the detection electrode 8d. The shield member 8b is located on the side of the first insulating member 8a opposite to the metal bracket 26. The surface of the shield member 8b on the side of the housing 20 is connected to the first insulating member 8a. The surface of the shield member 8b opposite to the housing 20 is attached to the second insulating member 8c.

The second insulating member 8c is made of an insulating film (polyimide film), for example, and insulates the detection electrode 8d from contacting other members including the shield member 8b. The second insulating member 8c is located on the side of the shield member 8b opposite to the first insulating member 8a. The surface of the second insulating member 8c on the side of the housing 20 is attached to the shield member 8b. The surface of the second insulating member 8c opposite to the housing 20 is attached to the detection electrode 8d.

In the layered structure 8, the detection electrode 8d is located farthest from the housing 20 and closest to the cover 21. The surface of the detection electrode 8d on the side of the housing 20 is attached to the second insulating member 8c. The surface of the detection electrode 8d opposite to the housing 20 faces the cover 21. The detection electrode 8d is connected to a terminal P1 of the circuit substrate 9 via the signal line 104 of the signal cable 100. A detection signal is transmitted to the detection electrode 8d from the circuit substrate 9 via the signal line 104.

The first insulating member 8a, the shield member 8b, and the second insulating member 8c are formed in a shape identical to the shape of the detection electrode 8d. The shield member 8b may be formed in any shape and any size as long as it is formed in a shape that can shield the detection electrode 8d from other parts including the motor 23 and the circuit substrate 9 inside the housing 20 and that can be accommodated between the cover 21 and the housing 20.

The signal cable 100 is a composite cable that includes, in the order radially from the outer side to the inner side, an insulating coating 101, the shield line 102, an insulating layer 103 and the signal line 104, for example. In other words, the insulating coating 101, the shield line 102, the insulating layer 103 and the signal line 104 are arranged to form concentric cylinders. The signal cable 100 transmits signals between the circuit substrate 9 and the detection electrode 8d using the signal line 104. The signal cable 100 also transmits signals between the circuit substrate 9 and the shield member 8b using the shield line 102.

The insulating coating 101 is a cylindrical coating, made of an insulating material, for electrically insulating the signal cable 100 from external parts. Specifically, the insulating coating 101 electrically insulates the shield line 102 from external parts. Examples of the insulating material include polyethylene, polyvinyl chloride, and polytetrafluoroethylene. The insulating coating 101 is formed to cover the outer circumference of the shield line 102.

The shield line 102 transmits a signal from the circuit substrate 9 to the shield member 8b. The shield line 102 is formed of a cylindrical conductor, made, for example, of copper or aluminum. One of the ends of the shield line 102 is connected to the shield member 8b. The other end of the shield line 102 is connected to the terminal P2 of the circuit substrate 9. The shield line 102 is disposed, coaxially with the insulating layer 103 and the signal line 104, to cover the outer circumference of the insulating layer 103. The shield line 102 can thereby reduce noise reaching the signal line 104, which is generated from parts inside the housing 20.

The insulating layer 103 is a cylindrical layer, made of an insulating material, for electrically insulating the shield line 102 and the signal line 104 from each other. The insulating material is a synthetic resin, such as foamed polyethylene and polytetrafluoroethylene. The insulating material forming the insulating layer 103 is not limited to the foregoing and may be made of any material that can insulate the shield line 102 and the signal line 104 from each other. The insulating material may be the same as the material of the insulating coating 101. The insulating layer 103 is disposed, coaxially with the shield line 102 and the signal line 104, to cover the outer circumference of the signal line 104.

The signal line 104 transmits the detection signal from the circuit substrate 9 to the detection electrode 8d and further transmits a signal indicative of a change in capacitance detected by the detection electrode 8d to the circuit substrate 9. The signal line 104 is formed with a conductor, made of copper or aluminum. One of the ends of the signal line 104 is connected to the detection electrode 8d. The other end of the signal line 104 is connected to the terminal P1 of the circuit substrate 9. The outer circumference of the signal line 104 may be covered with an insulating coating made of the same material as that of the insulating coating 101.

With the foregoing arrangement, the signal cable 100 is configured such that the shield line 102 is disposed coaxially with the outer circumference of the signal line 104 via the insulating layer 103. The signal cable 100 can thus prevent capacitance from forming between the signal line 104 and parts located near the signal cable 100 and can thereby prevent the detection range of the sensor 4 from becoming small.

### <Configuration Example of Circuit Substrate 9>

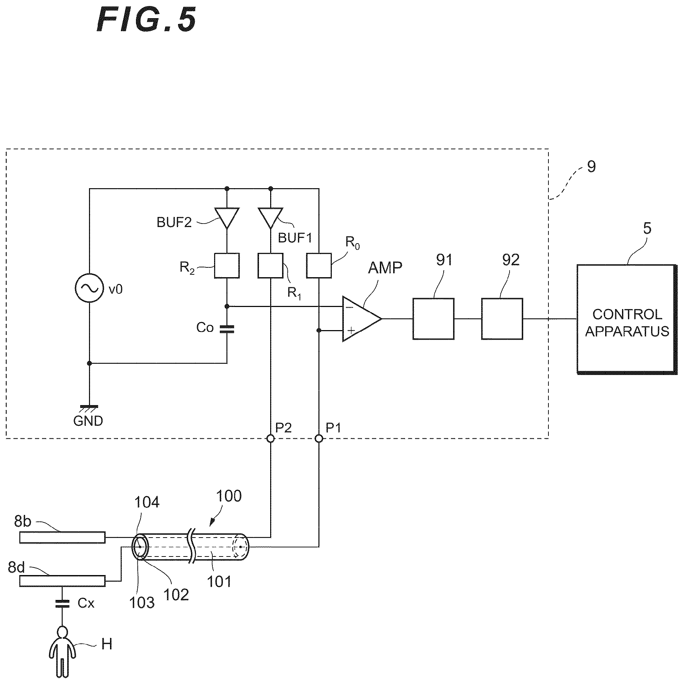

Next, details of the circuit configuration of the circuit substrate 9 will be described with reference to Fig. 5. Fig. 5 is a diagram showing an exemplary circuit configuration of the circuit substrate 9 shown in Fig. 3A. As shown in Fig. 5, the circuit substrate 9 includes a signal generation circuit v0, resistive elements R₀ to R₂, buffer circuits BUF1 and BUF2, a capacitive element C₀, an amplification circuit AMP, a signal extraction circuit 91 and a conversion circuit 92, for example.

The signal generation circuit v0 is made, for example, of an alternating-current signal generator or an arbitrary waveform generator and generates an alternating-current signal. The signal generation circuit v0 outputs the alternating-current signal to the detection electrode 8d via the resistive element R₀, the terminal P1 and the signal line 104 of the signal cable 100. The signal generation circuit v0 also outputs the alternating-current signal to the shield member 8b via the buffer circuit BUF1, the resistive element R₁, the terminal P2 and the shield line 102 of the signal cable 100. The signal generation circuit v0 also outputs the alternating-current signal to a non-inverting input terminal (+) of the amplification circuit AMP via the resistive element R₀. The signal generation circuit v0 also outputs the alternating-current signal to an inverting input terminal (-) of the amplification circuit AMP via the buffer circuit BUF2 and the resistive element R₂.

The resistive elements R₀ to R₂ are resistors, for example, and generally equivalent in resistance with each other. The resistive element R₀, together with a capacitance Cx formed between an object H (for example, a human) or the circumference surrounding the detection electrode 8d , divides the potential of the alternating-current signal transmitted from the signal generation circuit v0. The divided potential is inputted to the non-inverting input terminal (+) of the amplification circuit AMP and the detection electrode 8d. The resistive element R₁, together with a capacitance formed between the shield member 8b and the circumference surrounding the shield member 8b, divides the potential of the signal transmitted from the signal generation circuit v0 via the buffer circuit BUF1. The divided potential is inputted to the shield member 8b. The resistive element R₂, together with the capacitive element C₀, divides the potential of the signal transmitted from the signal generation circuit v0 via the buffer circuit BUF2. The divided potential is inputted to the inverting input terminal (-) of the amplification circuit AMP.

The capacitive element C₀ is a capacitor, for example. The capacitive element C₀, together with the resistive element R₂, divides the potential of the signal outputted from the buffer circuit BUF2.

The buffer circuits BUF1 and BUF2 are voltage followers, for example. The buffer circuits BUF1 and BUF2 electrically separate the circuits on their input terminal side from the circuits on their output terminal side and outputted from the output terminals signals having the same potentials as those of the signals inputted to the input terminals. The buffer circuit BUF1 receives the alternating-current signal generated by the signal generation circuit v0 and outputs to the resistive element R₁ a signal having a potential equivalent to that of the input alternating-current signal. The buffer circuit BUF2 receives the alternating-current signal generated by the signal generation circuit v0 and outputs to the resistive element R₂ a signal having a potential equivalent to that of the input alternating-current signal.

The amplification circuit AMP is a differential amplification circuit, made, for example, of an instrumentation amplifier or an operational amplifier. The amplification circuit AMP amplifies a potential difference between the non-inverting input terminal (+) and the inverting input terminal (-) and outputs a signal having the amplified potential from its output terminal. The potential divided by the capacitance Cx detected by the detection electrode 8d and the resistive element R₀ is inputted to the non-inverting input terminal (+) of the amplification circuit AMP. The potential divided by the capacitive element C₀ and the resistive element R₂ is inputted to the inverting input terminal (-) of the amplification circuit AMP.

The signal extraction circuit 91 is a lock-in amplifier, for example, and extracts a signal component within the frequency of the alternating-current signal generated by the signal generation circuit v0 from the signal outputted from the amplification circuit AMP. The signal extraction circuit 91 amplifies a signal having the extracted signal component and outputs the amplified signal to the conversion circuit 92.

The conversion circuit 92 is an analog-digital (AD) converter, for example. The conversion circuit 92 performs an AD conversion on the signal outputted from the signal extraction circuit 91 and outputs the converted signal to the control apparatus 5.

With the foregoing configuration, the sensor 4 outputs a sensor value indicative of the capacitance created according to the state (distance) between the detection electrode 8d and the object. The circuit configuration adopted by the circuit substrate 9 may include all or some of the foregoing components. The circuit configuration of the circuit substrate 9 is not limited to the foregoing. The circuit substrate 9 may take any circuit configuration as long as a sensor value can be outputted that is indicative of the capacitance created at the detection electrode 8d.

### <Operation and Effects>

As described above, in the present embodiment, the signal cable 100 for transmitting signals between the circuit substrate 9 and the detection electrode 8d includes the shield line 102 laid to surround the outer circumference of the signal line 104 with the insulating layer 103 being arranged between the shield line 102 and the signal line 104. The signal cable 100 also includes the insulating coating 101 coated to surround the outer circumference of the shield line 102. The shield line 102 of the signal cable 100 is connected to the shield member 8b, which functions as an active shield for shielding the detection electrode 8d, while transmitting signals between the circuit substrate 9 and the shield member 8b. The shielding line 102 thus functions to suppress or block electrical noise from parts accommodated inside the housing 20, including the motor 23, from reaching the signal line 104. The robot system 1 can thus suppress the detection accuracy of the capacitive proximity sensor (sensor 4) from being compromised by the susceptibility of the signal cable 100 of the capacitive proximity sensor to electrical noise from the parts accommodated inside the fourth arm A4. Moreover, since the robot system 1 can suppress the formation of capacitance between the signal cable 100 and parts installed near the signal cable 100, the detection electrode 8d can be installed away from the circuit substrate 9.

The circuit substrate 9 is placed in the housing 20 on the inner side of the metal bracket 26. The metal bracket 26 is laid to provide shielding between the motor 23 and the detection electrode 8d. The metal member 27 is also placed in the housing 20 to provide shielding between the circuit substrate 9 and the motor 23. The metal bracket 26 thus can suppress electrical noise from the motor 23 from reaching the detection electrode 8d. Moreover, the metal member 27 can suppress electrical noise from the motor 23 from reaching the circuit substrate 9 and the signal cable 100 connected to the circuit substrate 9. The robot system 1 can further suppress the detection accuracy of the capacitive proximity sensor (sensor 4) from being compromised by the susceptibility of the signal cable 100 of the capacitive proximity sensor to the electrical noise from the parts inside the fourth arm A4. The robot system 1 can also prevent the performance of the circuit substrate 9 from being compromised by the electrical noise from the parts inside the fourth arm A4.

The metal bracket 26 may be integrally formed with the metal member 27. More specifically, the metal bracket 26 may be formed in a shape that provides shielding between the circuit substrate 9 and the motor 23 and also provides shielding between the circuit substrate 9 and the detection electrode 8d. The robot system 1 can thus further suppress the detection accuracy of the capacitive proximity sensor (sensor 4) from being compromised by the susceptibility of the signal cable 100 of the capacitive proximity sensor to the electrical noise from the parts inside the fourth arm A4. The robot system 1 can also suppress the performance of the circuit substrate 9 from being compromised by the electrical noise from the parts inside the fourth arm A4.

The metal bracket 26 is electrically grounded via the fourth arm A4. In other words, the metal bracket 26 has the same potential as the reference potential (ground) of the fourth arm A4. The metal bracket 26, since being grounded, has the enhanced function to shield the sensors from the electrical noise from the motor 23. The robot system 1 can thus further suppress the detection accuracy of the capacitive proximity sensor (sensor 4) from being compromised by the susceptibility of the signal cable 100 of the capacitive proximity sensor to the electrical noise from the parts placed inside the fourth arm A4.

The shield member 8b is formed in a shape that provides shielding between the detection electrode 8d and the metal bracket 26. Moreover, the layered structure 8, which is placed in the housing 20, includes the first insulating member 8a, the shield member 8b, the second insulating member 8c and the detection electrode 8d. These members are stacked in layers in the order from the inside of the housing 20 toward the outside thereof. The shield member 8b, since layered adjacent to the detection electrode 8d, can cancel out environmental noise appearing in the form of capacitances around the detection electrode 8d. The robot system 1 can thus further suppress the detection accuracy of the capacitive proximity sensor (sensor 4) from being compromised by the susceptibility of the signal cable 100 of the capacitive proximity sensor to capacitive noise from the parts inside the fourth arm A4.

### <Modifications>

The present invention is not limited to the foregoing embodiments. In other words, modifications made by those skilled in the art through design changes to the foregoing specific example are also encompassed within the scope of the present invention, as long as the features of the present invention are included. The elements included in the foregoing embodiment and the following modifications can be combined as far as technically feasible, and such combinations are also encompassed within the scope of the present invention as long as the features of the present invention are included.

For example, the foregoing embodiment has been described with the cover 21 being made of a resin material. However, the material forming the cover 21 is not limited to a resin material.

The foregoing embodiment has been described with the sensor 4 being placed in the fourth arm A4 of the robot 2. However, the installation location of the sensor is not limited to any particular location, and the sensor may be provided in a plural number not limited to any particular number. For example, the sensor 4 may be placed in each of the first, second, third, and fourth arms A1, A2, A3, and A4. A plurality of the sensors 4 may be placed in one of the arms.

In the foregoing embodiment, the control apparatus 5 is described with using the output of the sensor 3 to determine whether to stop (or decelerate) the operation of the robot 2. However, instead of the control apparatus 5, the circuit substrate 9 may be configured to make the determination.

In the foregoing embodiment, it is described that the circuit substrate 9 is included in the housing 20. However, the location of the circuit substrate 9 is not limited thereto. The circuit substrate 9 may be placed on the outer surface of the housing 20, or placed in any of the armes than the fourth arm A4, e.g., in the first arm A1, the second arm A2 or the third arm A3. Wherever the circuit substrate 9 is placed, the circuit substrate 9 may be surrounded or shielded by a metal bracket, a metal member, or the like to reduce the influence of the electromagnetic noise propagating from the parts to the circuit substrate 9 so placed.

## Claims

1. A robot system (1) comprising:
a plurality of arms (A1-A4) operated to perform a preprogrammed work;
a housing (20) configured to form an exterior of one of the plurality of arms (A1-A4), wherein the housing (20) stores a motor (23) driven to move said one of the plurality of arms (A1-A4);
a metal bracket (26) disposed in the housing (20) between the motor (23) and an outer circumference of the housing (20); and
a capacitive proximate sensor (4) operable to sense an object nearby;
wherein the capacitive proximate sensor (4) comprises:
a shield member (8b) located adjacent to the metal bracket (26) on a side of the metal bracket (26) opposite to the motor (23);
a detection electrode (8d) located adjacent to the shield member (8b) on a side of the shield member (8b) opposite to the metal bracket (26);
a circuit substrate (9) configured to transmit and receive a signal to and from the detection electrode (8d); and
a signal cable (100) including a signal line (104) configured to transmit the signal between the circuit substrate (9) and the detection electrode (8d), wherein the signal cable (100) further includes a cylindrical shield line (102) formed to surround the signal line (104) to transmit a signal between the circuit substrate (9) and the shield member (8b), and wherein the signal cable (100) further includes an insulating coating (101) coated to surround the shield line (102).

2. The robot system (1) according to claim 1, wherein;
the circuit substrate (9) is placed in the housing on a side of the metal bracket (26) away from the housing;
the metal bracket (26) is formed in a shape that provides shielding between the motor (23) and the detection electrode (8d); and
the robot system (1) further comprises a metal member (27) placed in the housing (20) to provide shielding between the circuit substrate (9) and the motor (23).

3. The robot system (1) according to claim 2, wherein the metal bracket (26) is integrally formed with the metal member (27).

4. The robot system (1) according to claim 1, wherein the metal bracket (26) is electrically grounded via the arm (A4).

5. The robot system (1) according to claims 1 to 4, wherein the capacitive proximate sensor (4) comprises a layered structure (8) including a layer of the shield member (8b) and a layer of the detection electrode (8d), wherein the layered structure (8) further includes a layer of first insulating member (8a) and a layer of second insulating member (8c), and
the layer of first insulating member (8a), the layer of shield member (8b), the layer of second insulating member (8c) and the layer of detection electrode (8d) are layered one next to another in an order toward away from the housing (20).
